# EUROPEAN PATENT APPLICATION

(11) **EP 1 729 165 A1**
(43) Date of publication of application: **06.12.2006**
(21) Application number: 05011667.2
(22) Date of filing: 31.05.2005
(51) Int. Cl.: G02C 1/04, G02C 1/06, G02C 1/08

(54) **Front for full rim glasses frame with holding band device and rapid fixing of the lenses to the frame**

(71) Applicant: Medana, Guido, 31049 Valdobbiadene (TV) (IT)
(72) Inventor: Medana, Guido, 31049 Valdobbiadene (TV) (IT)
(74) Representative: Massa, Patrizia

(57) **Abstract**

Front for full-rim glasses frames with a holding device and rapid fixing of the lenses to the frame, said front being of the type with a monopiece arch transversely projected with respect to the face of the user, which includes, at the temporal ends, two shaped and curved cross-pieces joined by a connecting intermediate nose bridge, wherein each cross piece in correspondence to the intrados, relative to the lateral nose, provides means for the hinging of the related side, and in which each cross-piece near to the intermediate connecting nose bridge provides a curved projection, directed towards the lower side of the glasses, which provides a first of the two ends of flexible holding means that partially enclose the peripheral edge of the lens to be joined to the front, the other side being provided with a second end , introduced by means of a through-hole obtained in correspondence to the temporal region of the front, that is equipped with a tooth that engages unidirectionally the portion of the second end of the flexible holding means.

## Description

The aim of this invention is a front for full-rim glasses frames with a holding band device and rapid fixing of the lenses to the frame.

The invention finds particular although not exclusive application in the field of the manufacturing of the frames and assembly of glasses.

Conventionally, glasses frames are made up of a front, the frame of which provides a monolithic body shaped curvilinearly in order to comprise two adjacent symmetrical rims that support and engage the lenses that are joined by an intermediate connecting nose bridge. The frame is completed by the sides, which are engaged to the front along the exterior of each rim by means of a nose and the relative articulation that projects perpendicularly in correspondence to the surface that looks at the face.

For the assembly of the lenses, a frame of this type requires the rims to have a certain elasticity, a function that substantially depends on the characteristics of the material used. In the case of the usual material such as cellulose acetate, the frame is induced to yield in correspondence to the rim of the glasses in order to allow the introduction of the lens that will then be held perimetrically, it is a relatively simple operation which requires minimum handling. Operationally, it is necessary to exert a force that produces, from the interior of the rim towards the exterior, a temporary and localised yielding, possibly with pre-heating, in such a as way to introduce the lens by exerting a light pressure. In order to allow the effective holding of the lens, both the edge of the lens along the perimeter, as well as the rim profile are shaped and counter-shaped to receive the corresponding portion to be held.

At present, it seems as if the assembly of the lenses to the corresponding frame is a consolidated and rather simple practice, also since the market offers numerous solutions intended to render the operation even simpler.

As a rule it is the opinion of the applicant that the solutions offered have still not achieved satisfactory results, above all in relation to the rapidity of assembly of the lenses to the front of the frame. In other words, for the most part it is not that simple to carry out the assembly or the substitution of the first lenses with second lenses, since this involves an operation that must be always be carried out by staff who are qualified and equipped for this aim, such as for example, an optical assistance centre. And in fact, in order to carry out the assembly or the substitution, the technician uses a device that heats the rim of the glasses locally, making the frame, once softened, deform the necessary amount for the lens to come out from the seat itself. Due to this, the operation can be carried out safely once every so often, while it is far more difficult if must be carried out with a greater frequency, as can occur for the assembly of large quantities of lenses or, for example, when there is need for the final user to substitute tinted lenses with others of a different tonality, without however resorting to the aid of the technician.

A more complex case is presented with the front, which is also full-rim, obtained in metal and that has rims with a continuity solution. These fronts, due to the material that is essentially less elastic than the first materials, present greater lens assembly difficulties since they require the use of particular and suitably sized tools to allow the disassembly and vice-versa. As a rule, said fronts provide the closure of the rims in correspondence with the noses by means of the juxtapositioning of the ends and therefore by means of the clamping of a corresponding holding screw of said ends.

A further difference is presented in the case of frames that also have full-rim fronts but are obtained in metal wire. An example is given in EP0895114 (Hyoi) which suggests a frame consisting of an arched section that provides two semi-rims, joined by a relative connecting bridge, which are engaged in relation to each semicircle, through the lower semicircle portion, to a flexible cable string provided in correspondence to the two ends of the engagement rings.

### PRIOR ART CLOSEST

GB698929 (Splaine) describes glasses consisting of a front whose monolithic frame in plastic material provides an arch which is higher than that to which the lenses are engaged, each being provided with a relative peripheral holding strip of the flexible type. Said arch, as a rule, presents a shape so as to comprise two cross-pieces, corresponding to the upper portion of the rims and a connecting nose bridge between said two cross-pieces. Furthermore, each cross-piece, on the side directed towards the flank of the glasses, has a portion that develops for a short section downwards, or rather along the temples, with a substantially curvilinear course. In the patent under consideration, it is foreseen that each lens is peripherally closed with a ring along the edge by a metallic material strip which provides the two juxtaposed ends near to the temporal region of the lenses, held together by a screw that simultaneously determines the fixing of said strip also to the arch. In one case, the cross-section of the metallic strip that encloses with a ring the edge of the lens can be of the «V» type so as to involve the entire thickness of the lens, or alternatively with a round section, in this hypothesis obviously only involving a minimum portion of the peripheral profile of said lens. Among the aims of said solution, there is the possibility of combining a mixed structure consisting of plastic parts and metal parts, effectively joined in such a way as to provide an amortizing function to allow a release in case of stresses and therefore for optimum adaptation to the weather conditions. A second aim consists, unlike the use of the most common plastic materials, in enlarging the visual surface thanks to the significant reduction of thickness that is implemented by means of the metallic strip in correspondence to the lower support portion of the lens. A third aim was also to facilitate assembly, also of the lenses, avoiding having to resort to holes being made in the latter for the assembly of the components.

In GB533161 (Chappell) a glasses assembly that provides a composite support front of the lenses is described. Also in this case, there is a monolithic arch, in metal or conventional plastic material, including two cross-pieces connected by an intermediate nose bridge, wherein each cross-piece provides at its end, corresponding to the flank of the glasses, a projection that is configured in such a way as to support, on the side that looks at the face of the user, a nose with the relative orthogonal articulation for hinging the side itself. The cross-piece portion, on the lower part with respect to the connecting nose bridge, provides for a short section, an interrupted projection, that develops in a slightly rounded way downwards to follow the profile of the edge of the lens and so as to provide, on the internal side of the glasses, the relative nose pad, also possibly in association with this and shaped in such a way as to project according to a usual anatomical shape. Moreover, a band made of metal or another material provided that it is flexible, which is embedded, with one end, in correspondence to said interrupted projection of each of the two opposite cross-pieces of the arch (see Figure 4 of the Table 1 related to the prior art). The other end of each of the two bands constitutes the engagement head and is to be attached in a recess, by means of a screw, obtained in correspondence to the lower front along the inferior profile corresponding to the hinging nose of the side.

As a rule, it is the opinion of the applicant that in the conventional proposals and in particular in both GB698929 (Splaine) and GB533161 (Chappell), the main problem relating to the faster assembly of the lenses to the front of the frame, in reality, has not yet been effectively solved.

With respect to both, in fact, there is the confluence of the small metallic components, such as screws, that oblige the manufacturer, in addition to the usual stocking and management of said screws, to carry out particular working that for minute dimensions during the lens assembly stage is not easy and involves specialized and attentive staff. Furthermore, the problem with the use of screw means, simply by their very the nature, makes glasses with little compactness, above with regard to time. In fact, it is known that the screws, on the strength of the often careless use of glasses, frequently tend to loosen, a circumstance that at best obliges the user to ensure regular maintenance of the glasses. In other cases, carelessness can cause the detachment of the essential parts, in this case of the band or at least of one end, with the consequent falling of the lenses.

A further inconvenience linked to the solution GB698929 (Splaine) is related to the fact that this solution concems glasses which provide the band substantially detached from the front and furthermore in metal. There is no doubt that this circumstance requires particular handling in the lens assembly stage, since it requires the preventive assembly of the band to the lens and only after the assembly to the front, or rather to the cross-piece portion of the arch involved.

With respect to the solution suggested by GB533161 (Chappell) as well as GB698929 (Splaine), that flexibility necessary for the fixing of the lenses in relation to their different profile is not provided. This much is evident, since the form of the lens is not always oval, but can often assume different forms, also polygonal. From a practical point of view GB698929 (Splaine) has been obliged to provide a band closed with a ring with dimensions and profile, although flexible, as close as possible to the form of the lens to be fixed, which results in a large availability of bands that is as large as the forms of the lenses most commonly used.

In the same way and perhaps it is even noticeable in GB533161 (Chappell), there is a substantial limitation of use. In fact, it is evident that the length of the band is to be predetermined just as the fixing point of the end not connected to the band of the arch is pre-fixed. These two conditions, consequently, cannot vary according to a different profile of the lens for which the band has been designed.

As a rule, these and other drawbacks make the frames of this type unsuitable for optimally satisfying the multiple needs of the manufacturers.

Therefore, the need for companies, particularly in this sector, to find more effective altemative solutions, with respect to solutions in existence up to now is important.

The aim of this invention is also to avoid the drawbacks described.

In this way, through the considerable creative contribution, the effect of which has allowed the achievement of considerable technical progress, certain aims and advantages are achieved.

A first aim intends to obtain a glasses frame and in particular a front that is more comfortable and effective above all with respect to the assembly of the lenses, a operation that can be executed by an individual with little expertise, without screws and without the use of particular tools or fittings, using minimum effort and with times significantly lower than usual. With regard to assembly, an extreme aesthetic flexibility and design is revealed, provided by the possibility to vary the form of the lenses without changing the structure, similar to structure today known as Rimless. Furthermore, the possibility of varying the materials that are also very different among themselves and rapid changing of said materials in case of breakages is observed.

A second aim consisted in allowing the production of compact glasses frames that ensure the uniform clamping and greater stability of the lenses to the front.

A third aim has allowed greater comfort and effectiveness of use, since the band, being flexible, is adaptable to any lens for the support of the latter to the arch of the glasses, independently of the peripheral development of the profile. It is not required, moreover to provide specific bands according to the dimensions of the perimeter of the lens. This makes it possible for the band used to be of the standard type, being obtained, with a constant length and with a locally toothed portion where the longitudinal development of the latter portion achieves for itself a certain tolerance margin in varying the perimetrical length of the edge of the lens.

One further aim was to contain the industrial costs, with low operating costs, having identical pieces that are adaptable to different forms.

### COMPARISON WITH THE SOLUTIONS CLOSEST TO THE PRIOR ART

With reference to GB698929 (Splaine) the differences are rather important. Firstly, the band described by GB698929 (Splaine) is completely released from the front and is to be engaged with the lens, in such a way as to enclose it with a ring. Differently, the object of the invention is a band, that in some cases can certainly also be disengaged from the two ends by the front but it is not used to enclose the entire edge of the lens, since it can only involve a part of the perimeter of the lens at least equal to or a little more than the total peripheral development. GB698929 (Splaine), moreover, proposes a metallic band that as flexible as it is, never reaches the characteristics of good adaptability of a band in plastic material. With respect to the connection of the band to the front, it has been seen that GB698929 (Splaine) requires screws on the two sides of the band and there is no hole in correspondence to the arch where said band passes and is engaged. In fact, this circumstance renders impossible the logical development of GB698929 (Splaine) to achieve, using an average technician, the solution that is the object of the invention of the applicant.

In relation to GB533161 (Chappell), a significant difference consists in the fact that the band provides a different anchorage of the free end of the arch. GB533161 (Chappell), in fact does not allow the registration of the tension of the band in proximity of the temporal regions, that instead, in the solution that is the object of this invention, is made possible by the confluence in the band of a plurality of adjusting teeth and by the hook holding means provided in logical correspondence to the front. Furthermore, GB533161 (Chappell) also does not provide any through hole, through the arch to allow the engagement of the end of the band, nor on the other hand is a solution immediately deducible, since holding systems for lenses with toothed bands are not known. On the other hand, even if the front for GB533161 (Chappell) hypothesized a through-hole for the transit of said end, the fixing, even if in an adjustable way, due to the absence of notable anteriority, could only be supposed only with a screw, that pressing on the band would have determined a possible registration. The result is that the invention proposed today, however, due to the provision of the hook obtained in the hole with the participation of the toothing obtained in the band, would have achieved an improvement with respect to rapidity of assembly and without screws, therefore a sufficient inventive level.

In conclusion, a front for glasses has been achieved through good technological content.

These and other advantages will appear from the following detailed description of a preferred solution with the aid of the enclosed schematic drawings, whose execution details are not to be considered as limitative but only illustrative.
- Figure 1: is a frontal view of the front that is the object of this invention for a frame for glasses.
- Figure 2: represents the front of the glasses frame with, reproduced locally in section the ends of the toothed bands engaged to the respective portion of the front;
- Figure 3: is a detailed sectional view of the end of one of the bands engaged with the respective portion of the front;
- Figure 4: is a detailed sectional view of the sole portion of the front intended to engage the end of the toothed band;
- Figure 5: is a plan view of the end of a first toothed band;
- Figure 6: reproduces the toothed band according to the section B-B of Figure 5;
- Figure 7: is a plan view of the end of a second toothed band;
- Figure 8: reproduces the toothed band according to the section A-A of Figure 7;
- Figures 9 and 10: are frontal views of a variant to the front that is the object of this invention for glasses frames;
- Figure 11: is a frontal view of the only upper arch of the front as in Figures 9 and 10;
- Figure 12: represents two toothed bands completely detached from the front of the glasses as in Figures 9 and 10;
- finally Figure 13,: represents, on the side facing the face, the upper arch of the front as in Figures 9 and 10.

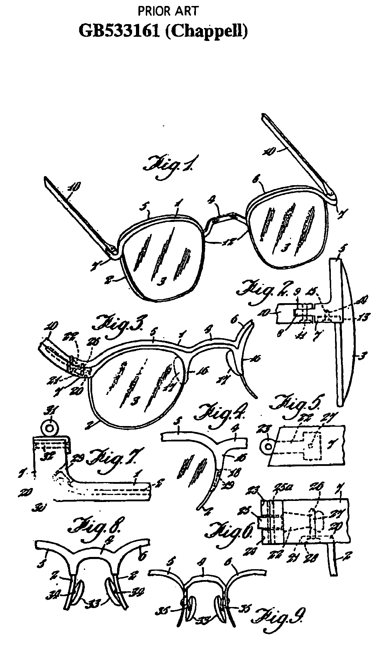

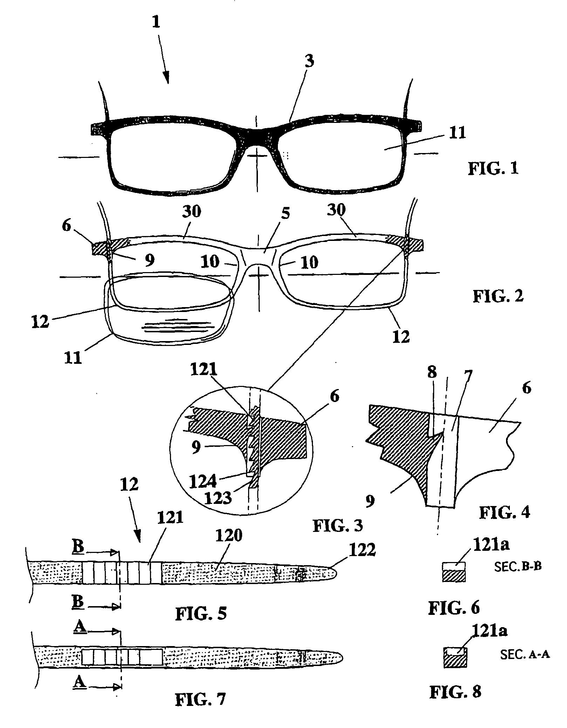

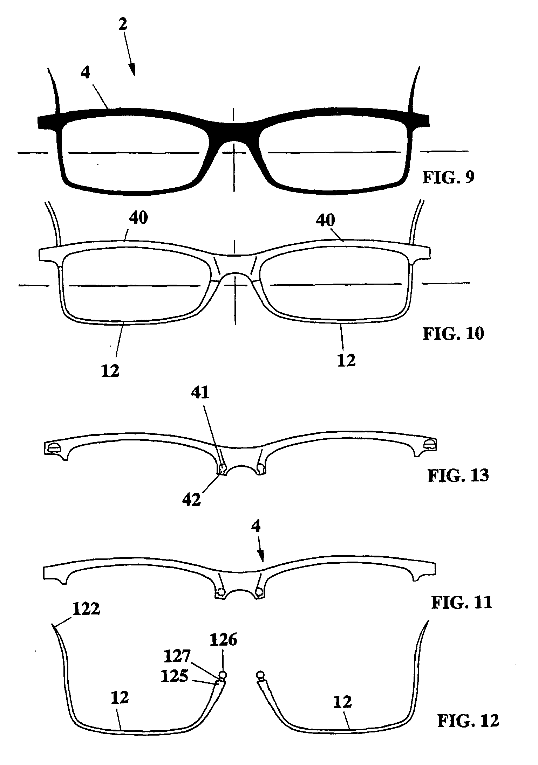

With reference to the Figures 1 and 9, it is observed that a frame for glasses consists of a front **1, 2,** that consists of a monopiece arch **3, 4,** made in plastic material such as cellulose acetate. Each arch **3, 4,** comprises two cross-pieces **30, 40** corresponding to the arches over the ciliary area, that are slightly curved downwards and joined without a solution of continuity by a connecting intermediate nose bridge **5.** Each cross-piece **30, 40,** at its two opposed ends in correspondence to the temples, provides noses **6** to allow, on the side facing the face, the hinging of each of the related foldable sides that support the glasses. Each nose **6** is characterized by a passing hole **7** that crosses rectilinearly and locally the thickness of the cross-piece **30, 40,** with an almost vertical orientation. Inside said hole **7** a hook **8** is obtained in a projecting way, which can be monolithically obtained from the same plastic material with the arch **3, 4,** is made or differently the use of a catch **8** made of different material, for example metal may be considered. The shape of the hook **8** can indicatively be intended as conical and misaligned, in such a way as to position the apex directed towards the upper edge of the arch **3, 4.** Alternatively, in place of the hook **8,** a common tooth can be provided. With regard to the lower edge of each arch **3, 4,** it is observed that in correspondence to the cross-pieces **30, 40** it is shaped in such a way as to receive the upper profile of the corresponding lens **11** and forms two opposite lateral container shoulders **9,10,** each of which close the curve of the lower edge of each cross-piece **30, 40.** Also in particular, the most external shoulders **9,** with respect to the arch **3, 4,** end in correspondence to the entrance of the passing hole **7** through the noses **6,** while the most internal shoulders **10** will close in correspondence to the intermediate connecting nose bridge **5.**

In a first solution, such as that of Figures 1 and 2, the arch 3 of a front **1,** for each cross-piece **30,** is provided with flexible peripheral holding means of the lens **11,** consisting of a band **12** of the type obtained in flexible plastic material, and with at least a facade **120,** provided with a locally toothed portion **121** directed towards the end **122,** that in this case is tapered. In more detail, the band **12** of each cross-piece **30** is the projection of the shoulder **10** being monolithically obtained from the arch **3,** and has a length development so as to peripherally involve the edge of the lens **11,** both along the flanks as well as along the lower profile. When the lens, with the upper profile, is in abutment of the lower edge of the respective cross-piece **30,** the band **12** is to be adapted along the remaining profile of the lens **11** so far as to enclose the lower portion, the end **122** being inserted inside the corresponding through hole **7.** In more detail, the end **122** is to be introduced into the through-hole **7** in such a way as to turn the locally toothed portion **121** towards the hook **8.** Even more in particular, the shape of each tooth **121 a** of the toothed portion **121** of the band **12** is characterized by an inclined surface **123** that has the function of an entrance chute, followed by an abutment wall **124** perpendicular to the band **12.** The orientation of the surface of the inclined surface **123** is such as to allow the band **12** to be introduced in one direction, or rather from the bottom upwards, through the hole **7** and until the hook **8** accepts the toothed portion **121.** By pulling the band **12** through the hole **7** it is possible to achieve the peripheral constriction of the lens **11** pushed against the lower edge of the respective cross-piece **30** of the arch **3.** With that, and a greater pulling force, the improved holding of the lens **11** is achieved making the band **12,** being slightly elastic, adapt itself peripherally and uniformly along the profile of said lens **11.** The band **12,** once introduced into the hole **7** and engaged by the hook **8** cannot return backwards, but can only possibly be adjusted further until reaching the desired tension. Therefore, the portion in excess of the end, projecting from the arch **3** is then cut and returned through the exit of the hole **7.**

One variant to the band **12** illustrated before can consist in providing the opposite end to that used in the hole **7** embedded in the plastic material with which the arch **3** is obtained, rather than to be directly obtained from the cross-piece **30** of said arch.

Figure 9 and the following Figures represent an additional hypothesis of a front **4** wherein the band **12** is always of the type obtained with an end, locally provided with a toothed portion **121** to engage with the respective cross-piece **40** and in the way illustrated above. In this case, however, this concerns a band materially dissociated from the structure of the arch **4** that is to be assembled, in correspondence to each cross-piece **40,** at the moment of the fixing of the lenses **11.** More particularly, the end **125** of the band **12** opposite to that which is partially toothed **121,** is provided with a cylindrical or spherical head **126,** followed by a shackle joint **127** on the end portion **125** of the band **12,** which presents smaller dimensions than the cylindrical or spherical head **126.** In this way, the cylindrical or spherical head **126** of the band **12** is to be introduced into one corresponding countersunk bushing seat **41** that provides an entrance **42** that receives the shackle joint **127.** Since there is the need to anchor two bands **12,** respectively one for each cross-piece **40,** there are two entrances **42** as well as two countersunk bushing seats **41,** obtained on the two sides of the saddle that characterizes the lower edge of the connecting nose bridge **5.** Finally, it is observed that the orientation of the entrances **42** that receive the shackle joints **127** is obtained in such a way as to intersect the tangent of the respective shoulder **10,** since once the end **125** of the band **12** is anchored, the latter acts as a logical development of the closing of the holding rim of the lens **11.**

With respect to the details of the band **12,** Figures 5 and 7 represent two possible hypotheses for the end of the toothed band **12.** In correspondence to one of the façades **120** of the band **12,** the toothed portion **121** is to be obtained, which in a first hypothesis, as shown in Figure 6, can configure a series of teeth **123, 124** which have a development for the entire width of the band **12.** Differently, in Figure 8, the series of teeth **123, 124** presents a width smaller than the width of the band **12,** in such a way as to leave two defining walls along the flanks that hide the central toothed portion.

Another solution considers the fact that the hook **8** can be replaced by a washer, in this case made of steel, of the radial cut type that forms deformable petals. In this way, passing centrally through said washer, the flexible peripheral holding means of the lens **11,** that in this case, in place of the band **12,** are provided by a small flexible cable, for example in steel strands. The deformation of the petals of the washer towards the traction direction of the flexible cable, in fact determines the impossibility of return of said cable since the peaks of each petal peripherally push against the circular wall of the flexible cable.

## Claims

1. Front for full-rim glasses frames, with a holding device and rapid fixing of the lenses to the frame, said front being of the type with a monopiece arch transversely projected with respect to the face of the user, which includes, at the temporal ends, two shaped and curved cross-pieces joined by a connecting intermediate nose bridge, wherein each cross-piece in correspondence to the intrados, relative to the lateral nose, provides means for the hinging of the related side, and in which each cross-piece near to the intermediate connecting nose bridge provides a curved projection, slightly directed towards the lower side of the glasses, which provides a first of the two ends of holding flexible means that partially enclose the peripheral edge of the lens to be joined to the front, **characterized in that** the flexible holding means of a second end are provided with second holding means, introduced unidirectionally by means of a through-hole obtained in correspondence to the temporal region of the front, said through-hole being provided with a hook that engages said second end of the flexible holding means.

2. Front for full-rim glasses frames with a holding device and rapid fixing of the lenses to the frame, according to claim 1, **characterized in that** the flexible holding means is a band whose second end introduced unidirectionally through a through-hole obtained in correspondence to the temporal region of the front is locally toothed.

3. Front for full-rim glasses frame with holding device and rapid fixing of the lenses to the frame, according to claims 1 and 2, **characterized in that** at the side of each cross-piece in correspondence to the nose a through-hole is provided that crosses rectilinearly and locally the thickness of the cross-piece, with an almost vertical orientation, and in which a hook or tooth is obtained in a projecting way inside said hole, said hook or tooth being monolithically obtained from the same material from which the arch is obtained.

4. Front for full-rim glasses frames with holding device and rapid fixing of the lenses to the frame, according to the previous claims, **characterized in that** for each cross-piece a band is joined of the type obtained in flexible plastic material which in correspondence to least one facade has a portion that is locally toothed and directed towards the tapered end.

5. Front for full-rim glasses frame with holding device and rapid fixing of the lenses to the frame, according to the previous claims, **characterized in that** the toothed band of each cross-piece is the projection of the adjacent shoulder, the connecting bridge being monolithically obtained from the arch, and has a length development such as to peripherally involve the edge of the lens, both along the flanks as well as along the lower profile.

6. Front for full-rim glasses frames, with holding device and rapid fixing of the lenses to the frame, according to the claims 1 and 4, **characterized in that** the toothed band of each cross-piece with the opposite end to that of engagement in the holding through-hole is embedded in material with which the arch is obtained.

7. Front for full-rim glasses frames with holding device and rapid fixing of the lenses to the frame, according to the claims 1 and 4, **characterized in that** the toothed clamp of each cross-piece with the opposite end to that of engagement in the holding through-hole is anchored to the cross-piece by means of a cylindrical or spherical head, followed by a shackle joint being introduced into a corresponding seat obtained at the side of the saddle profile of the lower edge of the connecting bridge.

8. Front for full-rim glasses frames with holding device and rapid fixing of the lenses to the frame, according to claim 1, **characterized in that** the flexible holding device is a metallic cable and that the hook consists of a washer in this case in steel, of the radial cut type that forms deformable petals.
